# EUROPEAN PATENT APPLICATION

(11) **EP 4 778 784 A1**
(43) Date of publication of application: **22.07.2026**
(21) Application number: 24864587.1
(22) Date of filing: 09.09.2024
(51) Int. Cl.: B60N 3/10, F25D 11/00

(54) **IN-VEHICLE BOX HAVING ADJUSTABLE TEMPERATURE AND VEHICLE**

(30) Priority: 14.09.2023 CN 202322505294 U
(71) Applicant: Shanghai Lixiang Automobile Co., Ltd., Shanghai 201800 (CN)
(72) Inventor: ZHANG, Ziwen, Shanghai 201800 (CN); QIU, Peng, Shanghai 201800 (CN)
(74) Representative: 2SPL Patentanwälte PartG mbB
(86) International application number: PCT/CN2024/117818
(87) International publication number: WO 2025/055867

(57) **Abstract**

The present application relates to an in-vehicle box having an adjustable temperature and a vehicle. The in-vehicle box having an adjustable temperature comprises a box body, a heat conduction film, and a heating body. The box body is internally provided with a storage cavity used for storing food and refrigerating or freezing the food. The heat conduction film is provided on at least part of a cavity wall of the storage cavity and is in heat conduction connection with the cavity wall of the storage cavity. The heating body is provided on the heat conduction film and is in heat conduction connection with the heat conduction film, so that heat generated when the heating body is powered on is transmitted to the cavity wall of the storage cavity by means of the heat conduction film, and after the cavity wall of the storage cavity is heated, as the temperature of the storage cavity rises, heat exchange is carried out between the storage cavity and air in the interior thereof, then the food located in the interior of said cavity can be heated. Thus, a heating function of the in-vehicle box having an adjustable temperature is achieved, enabling the in-vehicle box having an adjustable temperature to further have a heating function while also having refrigerating and freezing functions. Therefore, there are many use functions, and the use experience of a user is improved.

## Description

This application claims priority to Chinese patent application No. 202322505294.0, entitled "IN-VEHICLE TEMPERATURE REGULATING BOX AND VEHICLE", filed before the China National Intellectual Property Administration (CNIPA) on September 14, 2023, the entire contents of which are incorporated herein by reference.

### TECHINCAL FIELD

The present application relates to the technical field of in-vehicle refrigerators, and in particular, to an in-vehicle temperature regulating box and a vehicle.

### BACKGROUND

An in-vehicle refrigerator refers to a portable refrigeration cabinet for use in automobiles, which is popular due to a small size, low noise, vibration resistance and impact resistance. Nowadays, more and more people choose to use an in-vehicle refrigerator during self-driving trips to improve the quality of life during the journey.

An in-vehicle refrigerator generally includes a refrigerator body with an accommodating cavity for storing food, and the food is placed in the accommodating cavity for refrigeration or freezing. However, existing in-vehicle refrigerators do not have a heating function, resulting in relatively single functions and poor user experience.

### SUMMARY

In view of the above technical problems, the present application provides an in-vehicle temperature regulating box and a vehicle.

In a first aspect, the present application provides an in-vehicle temperature regulating box, including a box body, a thermal conductive film, and a heating element. The box body is provided with a storage cavity for storing food and refrigerating or freezing the food, the thermal conductive film is disposed on at least part of a cavity wall of the storage cavity and is in heat conduction connection with the cavity wall of the storage cavity. The heating element is disposed in a curved configuration on the thermal conductive film and embedded in the thermal conductive film, and the heating element is in heat conduction connection with the thermal conductive film.

Optionally, the thermal conductive film is disposed on an outer wall of the storage cavity.

Optionally, the thermal conductive film is adhered to the storage cavity through a thermal conductive adhesive;
and/or, a shape of the thermal conductive film matches a shape of at least part of the cavity wall of the storage cavity.

Optionally, the heating element includes a heating wire and an insulating sleeve, and the insulating sleeve is wrapped around an outer wall of the heating wire.

Optionally, the heating element further includes a wire core, the heating wire is spirally wound on an outer wall of the wire core, and the insulating sleeve is wrapped around the heating wire and the wire core.

Optionally, the outer wall of the wire core is provided with a limiting groove matched with the heating wire, along a radial direction of the wire core, part of the heating wire is accommodated in the limiting groove.

Optionally, a wrapping pitch of the heating wire is not less than 1.5 mm;
and/or, the heating wire includes a resistance alloy wire.

Optionally, the thermal conductive film includes an aluminum foil.

Optionally, the box body includes a housing, as well as an evaporator and a thermal insulation layer disposed in the housing; an inner cavity of the evaporator forms the storage cavity, the thermal conductive film is in heat conduction connection with an outer wall of the evaporator, and the thermal insulation layer is at least arranged around a side of the thermal conductive film facing away from the evaporator.

In a second aspect, the present application provides a vehicle, including the in-vehicle temperature regulating box described above.

Compared with the related art, the technical solutions provided by the embodiments of the present application have the following advantages.

In the in-vehicle temperature regulating box and vehicle provided by the present application, a box body, a thermal conductive film and a heating element are included, and the box body is provided with a storage cavity for storing food and performing refrigeration or freezing on the food. The thermal conductive film is disposed on at least part of the cavity wall of the storage cavity and in heat conduction connection with the cavity wall of the storage cavity. The heating element is disposed on the thermal conductive film and in heat conduction connection with the thermal conductive film. When the heating element is energized, heat generated by the heating element can be transferred to the cavity wall of the storage cavity through the thermal conductive film, thereby heating the storage cavity with high efficiency. After the storage cavity of the in-vielle refrigerator is heated, as the temperature of the storage cavity rises, heat exchange occurs between the storage cavity and the air inside it, thereby enabling heating treatment of the food placed therein. Thus, the heating function of the in-vehicle temperature regulating box is realized. In this way, the in-vehicle temperature regulating box has not only refrigeration and freezing functions but also a heating function, so that the in-vehicle temperature regulating box has rich usage functions and the user experience is improved.

The above description is only a general overview of solutions of the present disclosure. In order to learn technical means of the present disclosure more clearly and allow the technical means to be implemented based on the disclosure of the description, and in order to make the above and other objects, features and advantages of the present disclosure more apparent and understandable, specific embodiments of the present disclosure are illustrated below.

### BRIEF DESCRIPTION OF THE DRAWINGS

The accompanying drawings that are incorporated into and constitute a part of the present specification illustrate embodiments according to the present application, and are used to explain the principles of the present application together with the specification.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.
FIG. 1 is an exploded view of an in-vehicle temperature regulating box according to an embodiment of the present application;
FIG. 2 is an axonometric view of an in-vehicle temperature regulating box according to an embodiment of the present application;
FIG. 3 is an axonometric view of a heating element and a thermal conductive film of the in-vehicle temperature regulating box according to an embodiment of the present application;
FIG. 4 is an assembly view of a heating element, a thermal conductive film and a storage cavity of an in-vehicle temperature regulating box according to an embodiment of the present application;
FIG. 5 is an assembly view of a heating element, a thermal conductive film and a storage cavity of an in-vehicle temperature regulating box according to another embodiment of the present application;
FIG. 6 is an axonometric view of a heating element of an in-vehicle temperature regulating box according to an embodiment of the present application; and
FIG. 7 is a partial cross-sectional view of a heating element of an in-vehicle temperature regulating box according to an embodiment of the present application.

1. heating body; 11. thermal conductive film; 12. heating element; 121. heating wire; 122. insulating sleeve; 123. wire core; 2. evaporator; 3. thermal insulation layer; 4. housing; 5. storage cavity.

### DETAILED DESCRIPTION

To make objectives, technical solutions, and advantages of embodiments of the present disclosure clearer, solutions of the present disclosure will be given below. It should be noted that, in the absence of conflict, embodiments of the present disclosure and features in these embodiments may be combined with each other.

Many specific details are set forth in the following description to facilitate a full understanding of the present disclosure. However, the present disclosure may also be implemented in other ways different from those described herein. Apparently, the embodiments in the specification are only a part of the embodiments of the present disclosure, and not all of them.

### Embodiment I

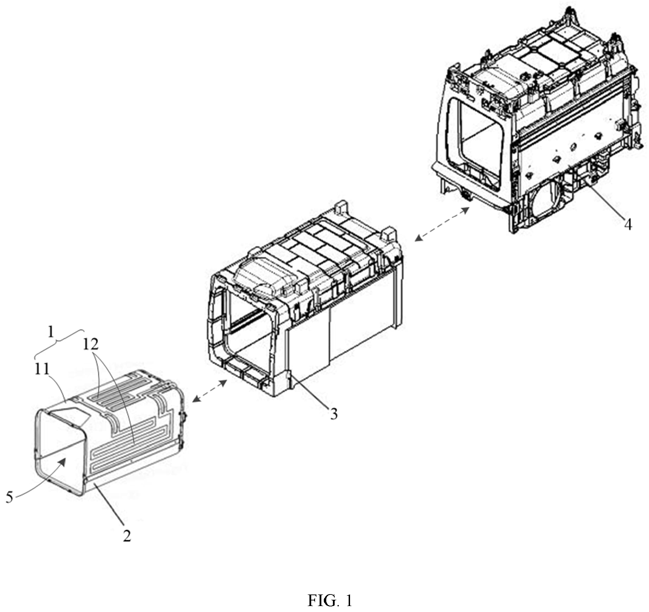

Referring to FIGS. 1 to 7, the present embodiment provides an in-vehicle temperature regulating box, such as an in-vehicle refrigerator. The following embodiments are illustrated by taking an in-vehicle refrigerator as an example of the in-vehicle temperature regulating box.

The in-vehicle refrigerator includes a box body, a thermal conductive film 11 and a heating element 12. The box body is provided with a storage cavity 5 for storing food and refrigerating or freezing food. The thermal conductive film 11 is disposed on at least part of a cavity wall of the storage cavity 5 and is in heat conduction connection with the cavity wall of the storage cavity 5, that is, heat transfer can be performed between the thermal conductive film 11 and the storage cavity 5. The heating element 12 is disposed on the thermal conductive film 11 and is in heat conduction connection with the thermal conductive film 11, that is, heat transfer can be performed between the heating element 12 and the thermal conductive film 11. Therefore, when the heating element 12 is energized to generate heat, the heat can be transferred to the cavity wall of the storage cavity 5, thereby heating the storage cavity 5. As the temperature in the storage cavity 5 rises, the food placed in the storage cavity 5 can be heated.

Since the thermal conductive film 11 is in heat conduction connection with the cavity wall of the storage cavity 5 and the heating element 12 is in heat conduction connection with the thermal conductive film 11, heat generated by the heating element 12 when energized and heat transferred from the heating element 12 to the thermal conductive film 11 can both be transferred to the cavity wall of the storage cavity 5, so as to heat the storage cavity 5. As the temperature of the storage cavity 5 rises, food placed in the storage cavity is further heated, thereby realizing a food heating function of the in-vehicle refrigerator, providing convenient use and enhancing the user experience.

It should be noted that the thermal conductive film 11 being in heat conduction connection with the cavity wall of the storage cavity 5 can be specifically understood as: the thermal conductive film 11 is in direct contact with the cavity wall of the storage cavity 5, or the thermal conductive film 11 is indirectly connected with the cavity wall of the storage cavity 5 through an intermediate member with thermal conductivity to realize heat transfer.

Similarly, the heating element 12 being in heat conduction connection with the thermal conductive film 11 can be specifically understood as: the heating element 12 is in direct contact with the thermal conductive film 11, or the heating element 12 is indirectly connected with the thermal conductive film 11 through an intermediate member with thermal conductivity to realize heat transfer.

In some embodiments, the storage cavity of the in-vehicle refrigerator can perform both refrigeration treatment and heating treatment on food; that is, the refrigeration treatment and the heating treatment of food by the in-vehicle refrigerator are conducted in the same cavity. Specifically, when the refrigeration function is activated, a heating body 1 does not operate, and the storage cavity is used to perform refrigeration treatment on the food. When the heating function is activated, the heating body 1 operates, and the storage cavity can then be used to perform heating treatment on the food.

If it is necessary to heat only a portion of the food, before activating the heating function, the food that does not require heating is taken out of the storage cavity 5, and the food that needs to be heated is placed in the storage cavity 5 for heating.

In some other embodiments, the in-vehicle refrigerator has a refrigeration cavity for refrigerating or freezing food. The storage cavity may also be a heating cavity independent of the refrigeration cavity and only used for heating food. That is, the refrigeration and heating treatments of food by the in-vehicle refrigerator are conducted in different cavities.

In specific implementation, the heating element 12 may be electrically connected to a controller of the in-vehicle refrigerator, by which the heating element 12 is controlled to be energized or de-energized. Alternatively, the heating element 12 may also be electrically connected to an external power supply such as a mobile power supply, so as to be powered by the mobile power supply.

The in-vehicle refrigerator provided in the embodiment includes a box body, a thermal conductive film 11, and a heating element 12. The box body is provided with a storage cavity 5 for storing food and refrigerating or freezing food. The thermal conductive film 11 is disposed on at least part of the cavity wall of the storage cavity of the in-vehicle refrigerator and is in heat conduction connection with the cavity wall of the storage cavity. The heating element 12 is disposed on the thermal conductive film 11 and is in heat conduction connection with the thermal conductive film 11. When the heating element 12 is energized, the heat generated by the heating element 12 can be transferred to the cavity wall of the storage cavity via the thermal conductive film 11, thereby heating the storage cavity with high heating efficiency. After the storage cavity of the in-vehicle refrigerator is heated, as the temperature of the storage cavity rises, heat exchange is performed between the storage cavity and the air inside thereof, so that the food placed in the storage cavity can be heated, thereby achieving the heating function of the in-vehicle refrigerator. Thus, the in-vehicle refrigerator has not only the refrigeration and freezing functions but also the heating function, providing rich use functions and enhancing the user experience.

In some embodiments, referring to FIGS. 1, 4 and 5, the thermal conductive film 11 is disposed on an outer wall of the storage cavity 5. On the one hand, the thermal conductive film 11 does not occupy the inner cavity size of the storage cavity 5, a larger storage space is reserved for food, and the space utilization rate is high. On the other hand, this can avoid the occurrence of the phenomenon that the service life of the thermal conductive film 11 is affected as a result of being contaminated by food, thereby improving its service life to a certain extent.

In some other embodiments, for example, the thermal conductive film 11 may be in heat conduction connection with an inner wall of the storage cavity 5.

In some other embodiments, for example, the cavity wall of the storage cavity 5 has a hollow interlayer, and the thermal conductive film 11 may be in heat conduction connection with the hollow interlayer of the storage cavity 5.

In some embodiments, for example, the thermal conductive film 11 may be adhered to the outer wall of the storage cavity 5 through a thermal conductive adhesive.

The thermal conductive film 11 is connected to the outer wall of the storage cavity 5 through the thermal conductive adhesive, so that heat on the thermal conductive film 11 can be transferred to the cavity wall of the storage cavity 5 through the thermal conductive adhesive, thereby heating food in the storage cavity 5. By providing the thermal conductive adhesive, heat conduction between the thermal conductive film 11 and the cavity wall of the storage cavity 5 is improved, thereby improving the heating efficiency of the in-vehicle refrigerator for the storage cavity 5, and further improving the heating efficiency for heating food.

In some other embodiments, for example, the thermal conductive film 11 may also be adhered to the outer wall of the storage cavity 5 by a double-sided adhesive.

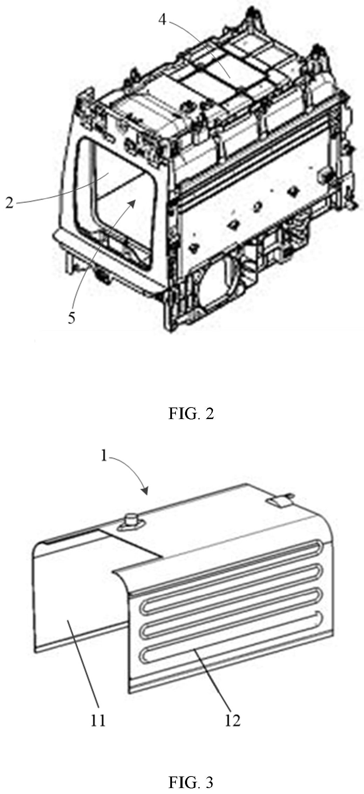

In some embodiments, referring to FIGS. 3 to 5, the thermal conductive film 11 is shaped to match at least part of the cavity wall of the storage cavity 5.

That is, the shape of the thermal conductive film 11 matches the shape of the storage cavity 5 at the position where the thermal conductive film 11 is connected, so that the thermal conductive film 11 can be tightly attached to the cavity wall of the storage cavity 5 to realize thermal connection for heat transfer, which helps to improve the heating efficiency of the in-vehicle refrigerator.

In some embodiments, referring to FIGS. 3 to 5, the thermal conductive film 11 has a relatively large contact area with the storage cavity 5, providing good load-bearing capacity for the heating element and good conformity between the thermal conductive film 11 and the storage cavity 5, thereby enabling a heating body 1 to achieve higher heating efficiency for the food.

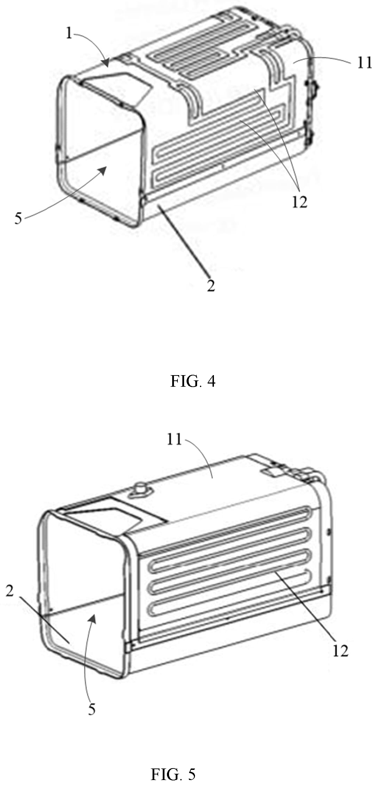

In some embodiments, referring to FIGS. 3 and 5, the heating element 12 is disposed in a curved configuration on the thermal conductive film 11.

By disposing the heating element 12 in a curved configuration, the length of the heating element 12 within the same space is increased, that is, the heating path of the thermal conductive film 11 on the in-vehicle refrigerator is increased, thereby increasing the contact area between the heating element 12 and the thermal conductive film 11, improving the heating efficiency for the storage cavity 5, and further improving the heating efficiency for heating food.

In some embodiments, the heating element 12 is embedded in the thermal conductive film 11, that is, the heating element 12 is inlaid and wrapped by the thermal conductive film 11. On the one hand, the thermal conductive film 11 has a certain protective effect on the heating element 12, which is beneficial to prolonging the service life of the heating body 1. On the other hand, the thermal conductive film 11 has a certain heat collection and aggregation effect on the heat generated when the heating element 12 is energized. The thermal conductive film 11 can also collect heat of the heating element 12 while exerting a heat conduction function, thereby avoiding, to a certain extent, the dissipation of the heat generated when the heating element 12 is energized, improving the heat exchange efficiency between the heating element 12 and the thermal conductive film 11, and further improving the heating efficiency of the heating body 1 for food.

In specific implementation, the heating element 12 may be, for example, embedded in the thermal conductive film 11 in a curved configuration. With such an arrangement, the contact area between the heating element 12 and the thermal conductive film 11 in the same space is increased, thereby improving the heating efficiency for the storage cavity 5, and further improving the heating efficiency of the storage cavity 5 for heating food.

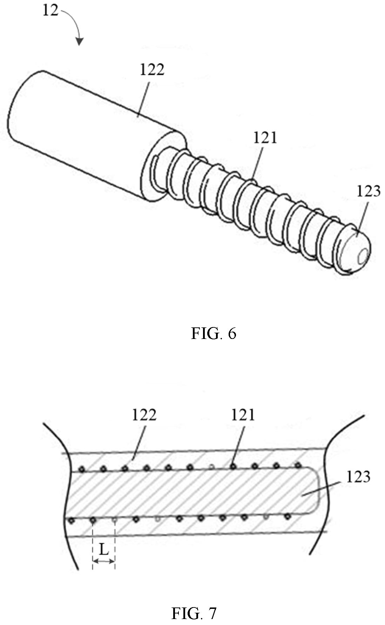

In some embodiments, referring to FIGS. 6 and 7, the heating element 12 includes a heating wire 121 and an insulating sleeve 122, and the insulating sleeve 122 is wrapped around an outer wall of the heating wire 121.

Since the insulating sleeve 122 is wrapped around the outer wall of the heating wire 121, a certain protective effect is provided to the heating wire 121. Therefore, the heating wire 121 is firmer, better in toughness and not easy to break, thereby further prolonging the service life of the heating element 12.

In some implementations, the insulating sleeve 122 may be, for example, a silicone rubber insulating sleeve 122, which is high temperature resistant, good in flexibility and convenient to arrange.

In specific implementation, the heating wire 121 may be, for example, a resistance alloy wire, which is good in toughness, convenient to process and low in cost.

In some embodiments, referring to FIGS. 6 and 7, the heating element 12 further includes a wire core 123, the heating wire 121 is spirally wound on an outer wall of the wire core 123, and the insulating sleeve 122 is wrapped around the exterior of the heating wire 121 and the wire core 123.

Since the heating wire 121 is wound on the wire core 123, the wire core 123 provides supporting function for the heating wire 121. Therefore, the heating wire 121 is tighter and firmer, better in toughness, the structural strength of the heating element 12 is enhanced, and the service life thereof is further prolonged.

In specific implementation, the heating wire 121 is spirally wound on the wire core 123, which can form an inductance and enhance the heating effect of the heating wire 121 to a certain extent. In addition, more heating wires 121 can be arranged in the same space. Compared with the situation that the heating wire 121 is arranged on the wire core 123 in a straight line, the spiral winding of the heating wire 121 makes the length thereof longer, that is, the heating path is longer, thereby further enhancing the heating effect of the heating wire 121.

In some implementations, the wire core 123 may be, for example, a glass fiber filament.

In some embodiments, a wrapping pitch L of the heating wire 121 is not less than 1.5 mm, that is, the winding pitch of the heating wire 121 is not less than 1.5 mm. A winding pitch greater than or equal to 1.5 mm enable the heating wire 121 to achieve a relatively good heating effect, so that the heating element 12 with the heating wire 121 has a relatively good heating effect on the storage cavity 5, which is beneficial to improving the heating effect and heating efficiency of the heating element 12 for food in the storage cavity 5. Moreover, phenomena such as electromagnetic interference caused by an excessively small wrapping pitch of the heating wire 121 can be avoided to a certain extent, which is beneficial to improving electrical safety performance.

In some embodiments, the outer wall of the wire core 123 is provided with a limiting groove matched with the heating wire 121. Along a radial direction of the wire core 123, a part of the heating wire 121 is accommodated in the limiting groove.

That is, a groove depth of the limiting groove is smaller than the diameter of the wire core 123, so that along the radial direction of the wire core 123, part of the heating wire 121 is accommodated in the limiting groove. Thus, the structural strength between the wire core 123 and the heating wire 121 is increased, the structure of the heating element 12 is more stable, and the arrangement of the heating element 12 on the thermal conductive film 11 is facilitated. Moreover, the plasticity of the heating wire 121 is relatively high, the phenomenon of breakage caused by bending, folding and other actions is avoided to a certain extent, and the service life is relatively long.

In some embodiments, the thermal conductive film 11 may be, for example, an aluminum foil, which is good in thermal conductivity, easy to manufacture and low in cost.

In some implementations, referring to FIG. 2, the box body includes a housing 4, as well as an evaporator 2 and a thermal insulation layer 3 disposed in the housing 4. Specifically, an inner cavity of the evaporator 2 forms the storage cavity 5, the thermal conductive film 11 is in heat conduction connection with an outer wall of the evaporator 2, and the thermal insulation layer 3 is at least arranged around a side of the thermal conductive film 11 facing away from the evaporator 2. The structure is simple, easy to manufacture and good in heating efficiency.

The thermal insulation layer 3 provides a thermal insulation effect on the storage cavity, and can avoid heat exchange between the storage cavity and the outside to a certain extent, so that the storage cavity has a relatively good temperature control effect on food placed in the storage cavity. Specifically, when the heating function of the in-vehicle refrigerator is activated to heat food in the storage cavity, the thermal insulation layer 3 has a heat preservation effect on the food. Alternatively, when the refrigeration function of the in-vehicle refrigerator is activated to refrigerate food in the storage cavity, the thermal insulation layer 3 has a cold preservation effect on the food.

In specific implementation, the thermal insulation layer 3 may be, for example, a foamed layer, which has a relatively good thermal insulation effect.

When the heating function is activated, the thermal insulation layer 3 also provides a thermal insulation effect on the thermal conductive film 11 and the heating element 12, thereby avoiding outward dissipation of heat generated when the heating element 12 of the in-vehicle refrigerator is energized. This is beneficial to improving the heating efficiency of the in-vehicle temperature regulating box for the storage cavity, and further improving the heating efficiency for food.

In some implementations, the in-vehicle refrigerator further includes a controller, and the heating element 12 is electrically connected with the controller. The heating element 12 is controlled to be energized or de-energized by the controller. Such structure is simple and easy to implement.

When food in the storage cavity 5 needs to be heated, the controller controls the heating element 12 to be energized. Part of heat generated by the heating element 12 can be directly transferred to the cavity wall of the storage cavity 5, and part of heat generated by the heating element 12 can also be transferred to the cavity wall of the storage cavity 5 through the thermal conductive film 11, so as to heat the storage cavity 5 with high heating efficiency. After the storage cavity 5 of the in-vehicle refrigerator is heated by the thermal conductive film 11 and the heating element 12, as the temperature of the storage cavity 5 rises, heat exchange occurs between the storage cavity 5 and air inside the storage cavity 5, so as to heat food placed in the storage cavity 5, thereby realizing the heating function of the in-vehicle refrigerator. That is, by thermally connecting the thermal conductive film 11 and the heating element 12 with at least part of the cavity wall of the storage cavity 5, the in-vehicle refrigerator also has a heating function in addition to a refrigeration and freezing function, the use functions are increased, and user experience is improved.

Alternatively, the controller may also be, for example, a control part of a vehicle.

### Embodiment II

The present embodiment provides a vehicle including an in-vehicle temperature regulating box.

The specific structure and implementation principle of the in-vehicle temperature regulating box in the present embodiment are the same as those of the in-vehicle temperature regulating box provided in Embodiment I, and can bring the same or similar technical effects, which are not repeated herein. Reference may be made to the description of the foregoing embodiment.

The specific structure and implementation principle of the in-vehicle refrigerator in the present embodiment are the same as those of the in-vehicle refrigerator provided in Embodiment I, and can bring the same or similar technical effects, which are not repeated herein. Reference may be made to the description of the foregoing embodiment.

It should be noted that the terms "comprise", "include" or any other variant thereof are intended to cover a non-exclusive inclusion, such that a process, method, article, or apparatus that includes a list of elements includes not only those elements but also other elements not expressly listed, or further includes elements inherent to such process, method, article, or apparatus. Without further limitation, an element defined by the statement "comprises one..." does not exclude the existence of additional identical elements in the process, method, article, or apparatus that includes said element.

The above are merely specific embodiments of the present application, enabling those skilled in the art to understand or implement the present application. Various modifications to these embodiments will be readily apparent to those skilled in the art, and the general principles defined herein may be implemented in other embodiments without departing from the spirit or scope of the present application. Therefore, the present application will not be limited to these embodiments described herein, but is to be accorded the widest scope consistent with the principles and novel features disclosed herein.

## Claims

1. An in-vehicle temperature regulating box, comprising a box body, a thermal conductive film and a heating element;
wherein the box body is provided with a storage cavity for storing food and refrigerating or freezing the food, the thermal conductive film is disposed on at least part of a cavity wall of the storage cavity and is in heat conduction connection with the cavity wall of the storage cavity; the heating element is disposed in a curved configuration on the thermal conductive film and embedded in the thermal conductive film, and the heating element is in heat conduction connection with the thermal conductive film.

2. The in-vehicle temperature regulating box according to claim 1, wherein the thermal conductive film is disposed on an outer wall of the storage cavity.

3. The in-vehicle temperature regulating box according to claim 2, wherein the thermal conductive film is adhered to the storage cavity through a thermal conductive adhesive;
and/or, a shape of the thermal conductive film matches a shape of at least part of the cavity wall of the storage cavity.

4. The in-vehicle temperature regulating box according to claim 1, wherein the heating element comprises a heating wire and an insulating sleeve, and the insulating sleeve is wrapped around an outer wall of the heating wire.

5. The in-vehicle temperature regulating box according to claim 4, wherein the heating element further comprises a wire core, the heating wire is spirally wound on an outer wall of the wire core, and the insulating sleeve is wrapped around the heating wire and the wire core.

6. The in-vehicle temperature regulating box according to claim 5, wherein the outer wall of the wire core is provided with a limiting groove matched with the heating wire, along a radial direction of the wire core, part of the heating wire is accommodated in the limiting groove.

7. The in-vehicle temperature regulating box according to claim 5, wherein a wrapping pitch of the heating wire is not less than 1.5 mm;
and/or, the heating wire comprises a resistance alloy wire.

8. The in-vehicle temperature regulating box according to any one of claims 1 to 7, wherein the thermal conductive film comprises an aluminum foil.

9. The in-vehicle temperature regulating box according to any one of claims 1 to 7, wherein the box body comprises a housing, as well as an evaporator and a thermal insulation layer disposed in the housing;
an inner cavity of the evaporator forms the storage cavity, the thermal conductive film is in heat conduction connection with an outer wall of the evaporator, and the thermal insulation layer is at least arranged around a side of the thermal conductive film facing away from the evaporator.

10. A vehicle, comprising the in-vehicle temperature regulating box according to any one of claims 1 to 9.
